(19) Europäisches Patentamt
European Patent Office
Office européen des brevets

(11) **EP 0 919 792 B1**

(12) **FASCICULE DE BREVET EUROPEEN**

(45) Date de publication et mention
de la délivrance du brevet:
**03.02.2016 Bulletin 2016/05**

(51) Int Cl.:
*G01F 25/00* (2006.01)    *G01F 1/32* (2006.01)
*G01F 15/00* (2006.01)    *G01F 15/02* (2006.01)

(21) Numéro de dépôt: **98402579.1**

(22) Date de dépôt: **16.10.1998**

(54) **Compteur de volume d'un fluide en écoulement**

Volumendurchflussmesser

Fluid volume flowmeter

(84) Etats contractants désignés:
**DE DK ES GB IT NL**

(30) Priorité: **28.11.1997 FR 9715043**

(43) Date de publication de la demande:
**02.06.1999 Bulletin 1999/22**

(73) Titulaire: **Tokheim Services France
Société par actions simplifiée
92350 Le Plessis Robinson (FR)**

(72) Inventeurs:
• **Nitecki, Jean Pierre
78530 Buc (FR)**

• **Siri, Patrick
80100 Abbeville (FR)**

(74) Mandataire: **Cabinet HERRBURGER
115, Boulevard Haussmann
75008 Paris (FR)**

(56) Documents cités:
**EP-A- 0 393 938**    **EP-A1- 0 393 938**
**WO-A-93/18372**    **WO-A-97/22854**
**DE-A- 2 644 302**    **US-A- 4 610 162**

EP 0 919 792 B1

**EP 0 919 792 B1**

**Description**

La présente invention concerne un compteur de volume d'un fluide en écoulement.

L'invention trouve une application particulièrement avantageuse dans le domaine de la mesure de précision du volume de fluide délivré par un appareil de distribution, notamment un distributeur de carburant.

Les appareils de distribution de carburant sont équipés d'un organe de mesure du volume de carburant délivré. Cet organe, appelé aussi mesureur, est généralement un compteur mécanique du type volumétrique.

Un mesureur mécanique a pour fonction de produire à partir de l'écoulement du carburant un mouvement de rotation dont une révolution complète correspond à un volume donné du carburant traversant le mesureur. On connaît par exemple le mesureur à pistons dans lequel le liquide provenant de la pompe du distributeur est injecté dans 2 ou 4 cylindres qui sont remplis et vidés successivement par l'intermédiaire d'un dispositif de tiroirs de distribution. Les pistons actionnent un vilebrequin dont l'angle de rotation est proportionnel au volume de liquide qui a traversé les cylindres. Un système d'encodage optique ou magnétique couplé au mouvement de rotation fournit un signal électrique constitué d'une série d'impulsions dont chacune correspond au pas volumétrique de mesure, 1cl par exemple.

La technique des compteurs de volume à pistons / cylindres est bien maîtrisée depuis de nombreuses années mais elle présente cependant un certain nombre d'inconvénients, à savoir :

- nombreuses pièces mécaniques,
- tolérances d'usinage serrées,
- encombrement important,
- pièces en mouvement présentant des phénomènes d'usure par friction qu'il faut compenser par des étalonnages périodiques,
- tenue problématique des matériaux aux composants chimiques contenus dans les carburants,
- bruits mécaniques,
- volume interne important ne permettant pas de faire du comptage séquentiel de plusieurs, produits dans le même compteur.

Aussi, le problème technique à résoudre par l'objet de la présente invention est de proposer un compteur de volume d'un fluide en écoulement qui permettrait de remédier aux inconvénients présentés par les compteurs mécaniques connus, notamment en limitant le nombre de pièces en mouvement.

La solution au problème technique posé consiste, selon la présente invention, en ce que ledit compteur comprend les caractéristiques de la revendication 1.

Ainsi, le compteur de volume conforme à l'invention ne comporte aucune pièce en mouvement, ce qui élimine tous les problèmes d'usure et de bruit. De même qu'il est de réalisation mécanique simple, compacte, économique, et insensible aux variations de pression et aux vibrations. Enfin son faible volume interne autorise le comptage séquentiel de plusieurs carburants.

Rappelons qu'un oscillateur fluidique est un compteur dit statique dans lequel le fluide dont on veut mesurer le volume en écoulement traverse une cavité conçue de façon à provoquer un mouvement oscillatoire périodique du flux de fluide. La fréquence des oscillations du fluide est en première approximation proportionnelle au débit du fluide traversant l'oscillateur. La précision obtenue est de l'ordre de $\pm 2\%$. Dans beaucoup de cas, cette précision est suffisante. Toufefois, pour ce qui est des carburants, la législation actuelle exige une précision beaucoup plus grande de $\pm 0,3\%$. Il faut alors tenir compte d'un terme correctif dépendant du nombre de Reynolds du fluide dans l'oscillateur. La détermination du nombre de Reynolds exige celle de la viscosité du fluide (voir EP 0 393 938 A1); c'est précisément ce que permet d'obtenir l'agencement du compteur de volume de l'invention, selon les principes décrits dans la demande de brevet français No. 97/15042 ou EP 0 919 800 A1.

La description qui va suivre en regards des dessins annexés, donnés à titre d'exemples non limitatifs, fera bien comprendre en quoi consiste l'invention et comment elle peut être réalisée.

La figure 1 est une vue schématique en coupe d'un oscillateur fluidique.

La figure 2 est un diagramme donnant les variations du nombre d'oscillations par litre de l'oscillateur fluidique de la figure 1 en fonction du nombre de Reynolds.

La figure 3 est un schéma d'un premier mode de réalisation d'un compteur de volume conforme à l'invention.

La figure 4 est un schéma d'un deuxième mode de réalisation d'un compteur de volume conforme à l'invention.

La figure 5 est une vue schématique en coupe du compteur de volume de la figure 4.

La figure 6 est un diagramme donnant les variation au cours du temps du signal provenant de l'oscillateur fluidique de la figure 1 et du signal correspondant provenant d'un circuit de mise en forme.

La figure 7 est un bloc-diagramme des moyens de correction de la mesure de volume en fonction du nombre de Reynolds.

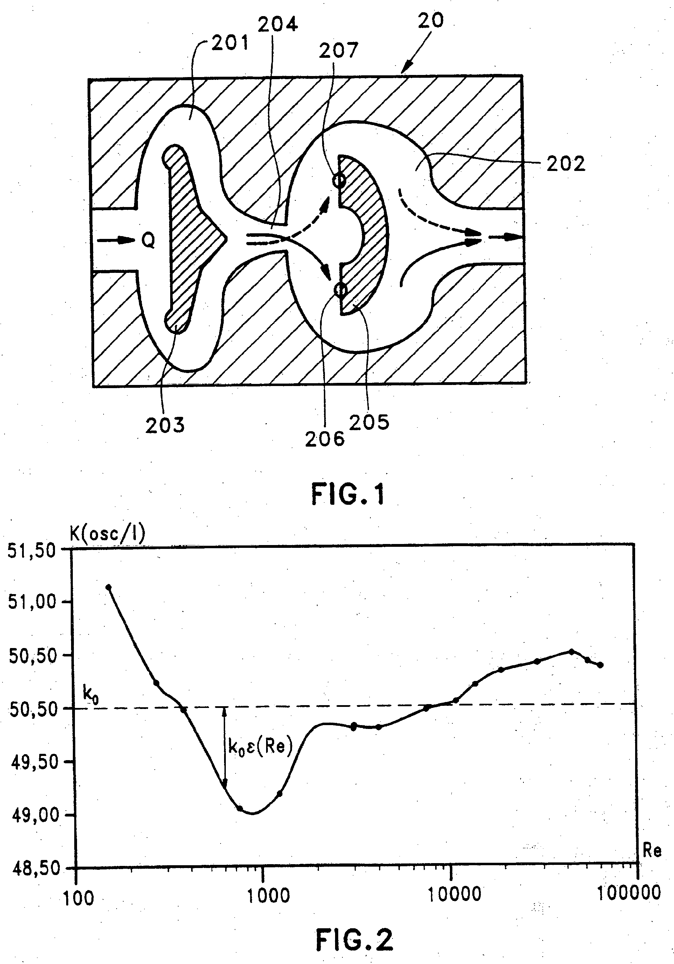

Sur la figure 1 est représenté en coupe un oscillateur fluidique 20 dont le principe, connu en soi, consiste à faire transiter un fluide dans une cavité conçue de manière à ce que le fluide qui la traverse soit soumis à des mouvements oscillatoires périodiques. Une relation fidèle relie la fréquence des oscillations au débit qui traverse la cavité. Un dispositif électronique permet de transformer le signal périodique fourni par l'oscillateur fluidique en impulsions correspondant au pas volumétrique de mesure. Le décompte des impulsions donne directement la mesure du volume, faisant de l'oscillateur fluidique un compteur volumétrique.

On peut voir sur la figure 1 que, de manière classique, l'oscillateur fluidique 20 comprend une première cavité 201 servant de conditionneur de flux. En effet, le fluide incident peut être soumis à des répartitions de vitesses internes dépendant de l'installation et risquant de perturber la mesure. Le flux de fluide heurte un obstacle 203 qui oriente l'écoulement de façon contrôlée vers une fente calibrée 204, indépendamment de la canalisation placée en amont.

La fente 204 permet d'injecter le fluide à haute vitesse dans une deuxième cavité 202 comportant un deuxième obstacle 205 qui dévie le flux alternativement soit vers la droite (flèche continue), soit vers la gauche (flèche pointillée). Il se crée à l'intérieur de la cavité 202 des circulations de fluide qui réagissent sur le jet à haute vitesse, le forçant à changer de direction. Le phénomène s'inverse périodiquement en fonction du débit Q de fluide. La détection du changement de sens du jet par des capteurs 206, 207 permet donc de mesurer la fréquence F des oscillations et de connaître le débit Q. Pour un débit Q donné, la fréquence F est parfaitement stable, reproductible et fidèle. Il est donc possible de connaître le volume de fluide débité correspondant à chaque oscillation élémentaire. Les capteurs 206, 207 sont, par exemple, des sondes thermiques préchauffées dont on détecte les variations de résistance induites par les variations de vitesse du fluide en contact avec les sondes. Les sondes 206, 207 sont alimentées par un courant régulé, ce qui les conduit à s'échauffer par effet Joule et à porter leur température à une valeur supérieure à celle du fluide. Dans ce cas, le passage du jet de fluide se traduit par l'évacuation de la chaleur générée par les sondes.

En première approximation, la fréquence F d'un oscillateur fluidique est proportionnelle au débit Q du fluide :

$$F = KQ \qquad (1)$$

K étant un coefficient caractéristique de l'oscillateur fluidique.

Toutefois, comme l'indique la figure 2, on peut observer que le coefficient K de la relation (1) dépend pour un débit Q donné, du nombre Re de Reynolds de la cavité oscillante 202 :

$$Re = Q \ / \ h\nu$$

où h est la hauteur de la cavité et $\nu$ la viscosité cinématique du fluide.

La dispersion du coefficient K en fonction de R peut atteindre $\pm 2\%$, ce qui peut être acceptable dans un grand nombre de situations. Cependant s'agissant de la mesure du volume de carburant délivré par un distributeur, la précision imposée par l'Administration est de $\pm 0,3\%$. Les variations de K avec le nombre de Reynolds peuvent être représentées par la relation :

$$K = Ko \ (1 + \varepsilon \ (Re))$$

où Ko est une valeur moyenne et Ko $\varepsilon$(Re) l'écart à Ko pour le nombre de Reynolds Re. Sur la figure 2, Ko vaut 50 oscillations / litre.

La relation (1) s'écrit alors :

$$F = Ko \ (1 + \varepsilon(Re))Q \qquad (2)$$

Si qo est le volume élémentaire moyen correspondant à une oscillation de fréquence F (qo = 1/Ko) et si q est le volume élémentaire réel, la relation (2) s'écrit avec $\varepsilon$(Re) petit devant 1 :

$$q = qo \ (1 - \varepsilon(Re)) \qquad (3)$$

La prise en compte de la dispersion du coefficient K en fonction du nombre Re de Reynolds revient donc à corriger à chaque oscillation le volume élémentaire qo de la quantité qo $\varepsilon$(Re).

Le nombre de Reynolds dépendant, pour une cavité oscillante donnée, essentiellement de la viscosité, il est absolument nécessaire de pouvoir mesurer la viscosité du fluide en temps réel.

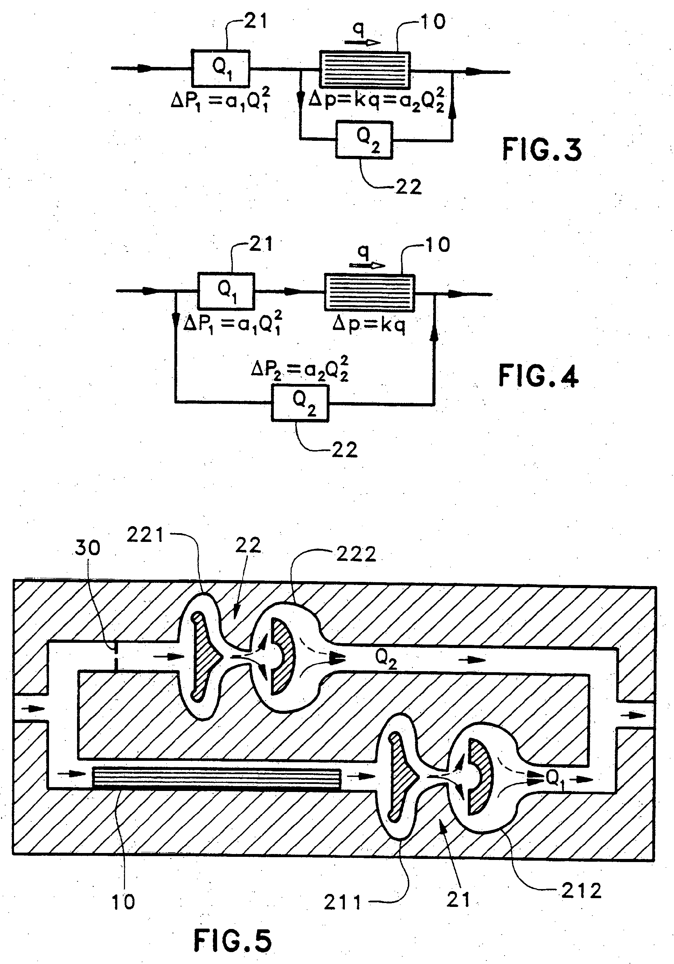

A cet effet, ainsi que le montrent les figures 3 et 4, il est prévu un compteur de volume de fluide en écoulement comprenant :

- un élément viscosensible 10 traversé par ledit fluide selon un régime d'écoulement laminaire,
- un premier oscillateur fluidique 21 en série avec ledit élément viscosensible 10,
- un deuxième oscillateur fluidique 22 en parallèle au moins sur l'élément viscosensible (10),

l'élément viscosensible 10 et lesdits oscillateurs fluidiques 21, 22 étant aptes à déterminer la viscosité du fluide.

La façon dont les compteurs de volume des figures 3 et 4 permettent de mesurer la viscosité du fluide est expliquée en détail dans la demande de brevet français No 97 15042 ou EP 0 919 800 A1. Rappelons seulement que :

- dans le cas de la figure 3 où le deuxième oscillateur fluidique 22 est placé en parallèle sur le seul élément viscosensible 10, la viscosité dynamique $\mu$ est donnée par :

$$\mu = (a_2/k)\ x^2\ Q_t\ /\ (1 - x) \qquad (4)$$

où x est le rapport $Q_1/Q_2$ des débits mesurés par les oscillateurs fluidiques 21, 22, $Q_t$ est le débit total, ici $Q_1$, et où $a_2$ et k sont des paramètres caractéristiques du deuxième oscillateur fluidique 22 et de l'élément viscosensible 10, le rapport $(a_2\ /\ k)$ est connu par étalonnage préalable. La viscosité cinématique $\nu$ est reliée à la viscosité dynamique $\mu$ par $\nu = \mu\ /\ \rho$, $\rho$ étant la masse volumique du fluide.

- dans le cas de la figure 4 où le deuxième oscillateur fluidique 22 est placé en parallèle sur l'ensemble constitué par l'élément viscosensible 10 et le premier oscillateur fluidique 21, la viscosité dynamique $\mu$ du fluide est donnée par :

$$\mu = (1/k)\ (a_2 x^2 - a_1)\ Q_t\ /\ (x + 1) \qquad (5)$$

où x est le rapport $Q_1/Q_2$ des débits mesurés par les oscillateurs fluidiques 21, 22, $Q_t$ est le débit total $Q_1 + Q_2$, et où $Q_1$ est un paramètre caractéristique du premier oscillateur fluidique 21, les rapports $a_1/k$ et $a_2/k$ étant connus par étalonnage préalable.

L'élément viscosensible 10 est agencé de manière à assurer un régime laminaire du fluide sur toute la gamme de débits envisagés. Un exemple de réalisation d'un tel élément viscosensible est fourni par les pare-flammes utilisés dans les distributeurs de carburant.

On a montré sur la figure 5 un mode d'exécution particulier du compteur représenté schématiquement sur la figure 4. Comme on peut le remarquer, un diaphragme 30 de réduction de débit a été placé en série avec le deuxième oscillateur fluidique 22, ceci pour des raisons d'équilibrage de débits entre les deux branches. La présence du diaphragme 30 a pour effet d'augmenter le paramètre $a_2$ du deuxième oscillateur fluidique 22.

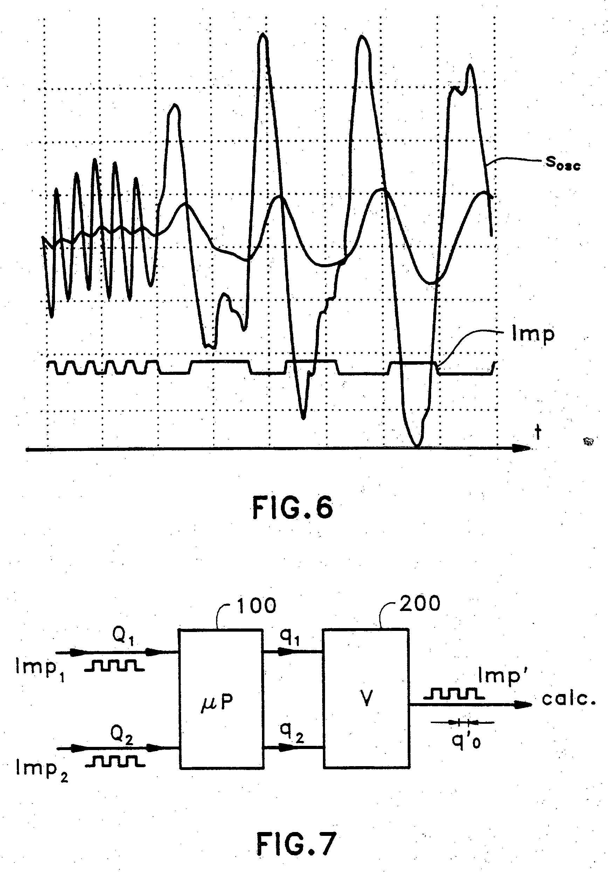

La figure 6 montre le signal $s_{osc}$ fourni directement par un oscillateur fluidique. Dans le cas d'un oscillateur à deux capteurs 206, 207 comme illustré sur la figure 1, le signal $s_{osc}$ est le signal différentiel des deux capteurs. En regard avec $s_{osc}$, on a représenté un signal impulsionnel Imp déduit de $s_{osc}$ par un circuit électronique de mise en forme, connu en soi. Chaque impulsion de Imp correspond au volume élémentaire réel q du fluide, la sommation sur toutes les impulsions des volumes élémentaires réels q donne le volume total du fluide écoulé.

Les compteurs de volume des figures 3 et 4 fonctionnent de la manière suivante.

Les débits $Q_1$ et $Q_2$ de fluide traversant les oscillateurs fluidiques 21, 22 sont déterminés à partir des formules approchées.

$$Q_1 \cong q_{o1}\ F1 \qquad et \qquad Q2 \cong q_{o2}\ F2$$

Connaissant $Q_1$ et $Q_2$, on connaît x et $Q_t$ dont on peut déduire la viscosité dynamique $\mu$ et, et donc la viscosité cinématique $\nu$, par les formules (4) et (5) appliquées soit analytiquement, soit sous forme de tables, après étalonnage.

Pour chaque oscillateur fluidique, on peut alors calculer le nombre de Reynolds correspondant, à savoir:

$$Re_1 = Q_1\ /h_1\nu \qquad et \qquad Re_2 = Q_2\ /h_2\nu$$

Puis, connaissant par étalonnage les corrections $\varepsilon_1(Re_1)$ et $\varepsilon_2(Re_2)$, il est possible de déterminer les volumes élémentaires réels correspondant à une impulsion dés signaux Imp$_1$ et Imp$_2$ :

$$q_1 = q_{01}\,(1 - \varepsilon_1\,(Re_1)) \qquad\qquad q_2 = q_{02}\,(1 - \varepsilon_2\,(Re_2))$$

Cette opération de correction est réalisée par un microprocesseur 100 représenté sur la figure 7. Un compteur 200 effectue la sommation impulsion par impulsion des volumes élémentaires réels $q_1$ et $q_2$ pour obtenir le volume total de fluide écoulé et à chaque fois qu'un volume élémentaire qo, par exemple 1cl, est compté, le compteur 200 fournit une impulsion Imp' à un calculateur, comme le calculateur d'un distributeur de carburant, lequel n'a plus qu'à compter les impulsions Imp' pour déterminer le volume de fluide écoulé. En variante, le compteur 200 pourrait tout aussi bien fournir le volume total cumulé, envoyé périodiquement sous forme codée.

Certains organismes officiels demandent que le volume soit corrigé en température. En effet, le volume d'un fluide, notamment les hydrocarbures, varie d'environ 0,1% par degré, et, la température variant entre -20°C et 35°C, la variation relative de volume du fluide peut atteindre 5%. Les sondes thermiques 206, 207 peuvent alors être utilisées pour mesurer également la température du liquide, la correction de volume étant effectuée par le microprocesseur 100.

### Revendications

**1.** Procédé de comptage d'un volume d'un fluide de masse volumique connue circulant dans un circuit avec un débit total (Qt) en corrigeant l'erreur de comptage liée à la viscosité du fluide en circulation, **caractérisé en ce qu'**

- on incorpore dans le circuit
un élément viscosensible (10) traversé par le fluide en circulation à mesurer et permettant d'assurer un régime d'écoulement laminaire de ce fluide sur toute la gamme de débits envisagée, et
soit
un premier oscillateur fluidique (21) monté en série avec l'élément viscosensible (10) ainsi qu'un second oscillateur fluidique (22) monté en parallèle sur l'élément viscosensible (10),
soit
un premier oscillateur fluidique (21) monté en série avec l'élément viscosensible (10) ainsi qu'un second oscillateur fluidique (22) monté en parallèle sur l'élément viscosensible (10) et sur le premier oscillateur fluidique (21),
- on détermine les débits ($Q_1$, $Q_2$) traversant chacun des oscillateurs fluidiques (21, 22) et
- on en déduit le débit total ($Q_t$) du fluide circulant dans le circuit en corrigeant la mesure de ce débit en fonction d'un paramètre dépendant de la viscosité ($\mu$) connu par étalonnage préalable, et du nombre de Reynolds.

**2.** Procédé selon la revendication 1,
**caractérisé en ce que**

- l'on monte le second oscillateur fluidique (22) en parallèle sur le seul élément viscosensible (10), et
- on corrige la mesure du débit total (Qt) à partir de la formule :

$$\mu = (a_2/k)\,x^2\,Q_t\,/\,(1-x)$$

dans laquelle $\mu$ est la viscosité du fluide, x est le rapport $Q_1/Q_2$ des débits mesurés par les oscillateurs fluidiques (21, 22), $Q_t$ est le débit total qui correspond à $Q_1$, et $a_2$ et k sont des paramètres caractérisé-tiques du second oscillateur fluidique (22) et de l'élément viscosensible (10), le rapport $a_2/k$ étant connu par étalonnage préalable.

**3.** Procédé selon la revendication 1,
**caractérisé en ce que**

- l'on monte le second oscillateur fluidique (22) en parallèle sur l'ensemble constitué par l'élément viscosensible (10) et le premier oscillateur fluidique (21), et
- on corrige la mesure du débit total ($Q_t$) à partir de la formule :

$$\mu = (1 \: / \: k) \: (a_2 x^2 - a_1) \: Q_t \: / \: (x + 1)$$

dans laquelle $\mu$ est la viscosité du fluide, x est le rapport $Q_1 / Q_2$ des débits mesurés par les oscillateurs fluidiques (21, 22), $Q_t$ est le débit total qui correspond à $Q_1 + Q_2$, et a1, a2 et k sont des paramètres caractéristiques du premier oscillateur fluidique (21), du second oscillateur fluidique (22) et de l'élément viscosensible (10), les rapports $a_1 / k$ et $a_2 / k$ étant connus par étalonnage préalable.

4. Procédé selon l'une quelconque des revendications 1 à 3,
   **caractérisé en ce que**
   l'on monte un diaphragme (30) en série avec au moins l'un des deux oscillateurs fluidiques (21, 22).

5. Procédé selon l'une quelconque des revendications 1 à 4,
   **caractérisé en ce que**
   les oscillateurs fluidiques (21, 22) sont munis de sondes thermiques préchauffées (206, 207).

6. Procédé selon l'une quelconque des revendications 1 à 5,
   **caractérisé en ce que**
   l'on met en oeuvre des moyens de correction du débit de fluide en fonction de la température.


**Patentansprüche**

1. Verfahren zur Messung eines Volumens eines Fluids mit bekannter Dichte, das in einem Kreislauf mit einem Gesamtdurchsatz ($Q_t$) zirkuliert, wobei der mit der Viskosität des zirkulierenden Fluids verbundene Messfehler korrigiert wird,
   **dadurch gekennzeichnet, dass**

   - in den Kreislauf Folgendes eingebaut wird:

     ein viskosensibles Element (10), das von dem zu messenden zirkulierenden Fluid durchströmt wird und das es ermöglicht, über den gesamten beabsichtigten Durchsatzbereich einen Laminarströmungsbetrieb dieses Fluids zu gewährleisten, und
     entweder
     ein erster Fluidoszillator (21), der in Reihe mit dem viskosensiblen Element (10) montiert ist, sowie ein zweiter Fluidoszillator (22), der parallel mit dem viskosensiblen Element (10) montiert ist,
     oder
     ein erster Fluidoszillator (21), der in Reihe mit dem viskosensiblen Element (10) montiert ist, sowie ein zweiter Fluidoszillator (22), der parallel mit dem viskosensiblen Element (10) und dem ersten Fluidoszillator (21) montiert ist,

     - die Durchsätze ($Q_1$, $Q_2$) durch jeden der Fluidoszillatoren (21, 22) bestimmt werden, und
     - davon der Gesamtdurchsatz ($Q_t$) des im Kreislauf zirkulierenden Fluids abgeleitet wird, indem die Messung dieses Durchsatzes mithilfe eines Parameters korrigiert wird, der von der Viskosität ($\mu$), die durch eine vorab erfolgte Kalibrierung bekannt ist, und von der Reynolds-Zahl abhängt.

2. Verfahren nach Anspruch 1,
   **dadurch gekennzeichnet, dass**

     - der zweite Fluidoszillator (22) parallel mit dem einzigen viskosensiblen Element (10) montiert wird, und
     - die Messung des Gesamtdurchsatzes ($Q_t$) auf Basis der folgenden Formel korrigiert wird:

     $$\mu = (a_2/k) \: x^2 \: Q_t \: / \: (1 - x)$$

     wobei $\mu$ die Viskosität des Fluids ist, x das Verhältnis $Q_1/Q_2$ der von den Fluidoszillatoren (21, 22) gemessenen Durchsätze ist, $Q_t$ der Gesamtdurchsatz ist, der $Q_1$ entspricht, und $a_2$ und k Parameter sind, die kennzeichnend für den zweiten Fluidoszillator (22) und das viskosensible Element (10) sind, wobei das Verhältnis $a_2/k$ durch eine vorab erfolgte Kalibrierung bekannt ist.

3. Verfahren nach Anspruch 1,
   **dadurch gekennzeichnet, dass**

   - der zweite Fluidoszillator (22) parallel mit der Einheit montiert wird, die aus dem viskosensiblen Element (10) und dem ersten Fluidoszillator (21) gebildet wird, und
   - die Messung des Gesamtdurchsatzes ($Q_t$) auf Basis der folgenden Formel korrigiert wird:

$$\mu = (1/k)\ (a_2x^2 - a_1)\ Q_t\ /\ (x + 1)$$

   wobei $\mu$ die Viskosität des Fluids ist, x das Verhältnis $Q_1/Q_2$ der von den Fluidoszillatoren (21, 22) gemessenen Durchsätze ist, $Q_t$ der Gesamtdurchsatz ist, der $Q_1 + Q_2$ entspricht, und $a_1$, $a_2$ und k Parameter sind, die kennzeichnend für den ersten Fluidoszillator (21), den zweiten Fluidoszillator (22) und das viskosensible Element (10) sind, wobei die Verhältnisse $a_1/k$ und $a_2/k$ durch eine vorab erfolgte Kalibrierung bekannt sind.

4. Verfahren nach einem der Ansprüche 1 bis 3,
   **dadurch gekennzeichnet, dass**
   eine Membran (30) in Reihe mit wenigstens einem der zwei Fluidoszillatoren (21, 22) montiert wird.

5. Verfahren nach einem der Ansprüche 1 bis 4,
   **dadurch gekennzeichnet, dass**
   die Fluidoszillatoren (21, 22) mit vorgewärmten Temperaturfühlern (206, 207) versehen sind.

6. Verfahren nach einem der Ansprüche 1 bis 5,
   **dadurch gekennzeichnet, dass**
   Mittel zur Korrektur des Fluiddurchsatzes in Abhängigkeit von der Temperatur eingesetzt werden.


**Claims**

1. Method for metering a volume of a fluid of known density flowing in a circuit with a total flow rate (Qt) while correcting the metering error associated with the viscosity of the flowing fluid,
   **characterised in that**

   - there are incorporated into the circuit
   a viscosensitive element (10) through which the flowing fluid to be measured passes and which allows laminar flow characteristics of the fluid to be ensured over the whole of the envisaged range of flow rates, and either
   a first fluidic oscillator (21) mounted in series with the viscosensitive element (10) and a second fluidic oscillator (22) mounted in parallel with the viscosensitive element (10), or
   a first fluidic oscillator (21) mounted in series with the viscosensitive element (10) and a second fluidic oscillator (22) mounted in parallel with the viscosensitive element (10) and with the first fluidic oscillator (21),
   - the flow rates ($Q_1$, $Q_2$) passing through each of the fluidic oscillators (21, 22) are determined, and
   - the total flow rate ($Q_t$) of the fluid flowing in the circuit is derived therefrom while correcting the measurement of the flow rate as a function of a viscosity ($\mu$)-dependent parameter known by prior calibration, and as a function of the Reynolds number.

2. Method according to claim 1,
   **characterised in that**

   - the second fluidic oscillator (22) is mounted in parallel with only the viscosensitive element (10), and
   - the measurement of the total flow rate (Qt) is corrected using the formula:

$$\mu = (a_2/k)\ x^2\ Q_t\ /\ (1-x)$$

wherein $\mu$ is the viscosity of the fluid, x is the ratio $Q_1/Q_2$ of the flow rates measured by the fluidic oscillators (21, 22), $Q_t$ is the total flow rate, which corresponds to $Q_1$, and $a_2$ and k are characteristic parameters of the second fluidic oscillator (22) and of the viscosensitive element (10), the ratio $a_2$/k being known by prior calibration.

**3.** Method according to claim 1,
**characterised in that**

- the second fluidic oscillator (22) is mounted in parallel with the assembly constituted by the viscosensitive element (10) and the first fluidic oscillator (21), and
- the measurement of the total flow rate ($Q_t$) is corrected using the formula:

$$\mu = (1\ /\ k)\ (a_2 x^2 - a_1)\ Q_t\ /\ (x + 1)$$

wherein $\mu$ is the viscosity of the fluid, x is the ratio $Q_1/Q_2$ of the flow rates measured by the fluidic oscillators (21, 22), $Q_t$ is the total flow rate, which corresponds to $Q_1 + Q_2$, and a1, a2 and k are characteristic parameters of the first fluidic oscillator (21), of the second fluidic oscillator (22) and of the viscosensitive element (10), the ratios $a_1$ / k and $a_2$/ k being known by prior calibration.

**4.** Method according to any one of claims 1 to 3,
**characterised in that**
a diaphragm (30) is mounted in series with at least one of the two fluidic oscillators (21, 22).

**5.** Method according to any one of claims 1 to 4,
**characterised in that**
the fluidic oscillators (21, 22) are provided with preheated temperature sensors (206, 207).

**6.** Method according to any one of claims 1 to 5,
**characterised in that**
means for correcting the flow rate of fluid as a function of the temperature are employed.

**FIG.1**

**FIG.2**

$$\Delta P_1 = a_1 Q_1^2 \qquad \Delta p = kq = a_2 Q_2^2$$

**FIG.3**

$$\Delta P_1 = a_1 Q_1^2 \qquad \Delta p = kq$$

$$\Delta P_2 = a_2 Q_2^2$$

**FIG.4**

**FIG.5**

**FIG.6**

**FIG.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0393938 A1
- FR 9715042
- EP 0919800 A1